# EUROPEAN PATENT APPLICATION

(11) **EP 4 580 304 A1**
(43) Date of publication of application: **02.07.2025**
(21) Application number: 24219534.5
(22) Date of filing: 12.12.2024
(51) Int. Cl.: H04W 76/15, H04W 48/18

(54) **NETWORK IMPLEMENTED METHOD, APPARATUS AND DEVICE FOR ANDROID SYSTEM-BASED DUAL NETWORK SERVICE COEXISTENCE**

(30) Priority: 28.12.2023 CN 202311848307
(71) Applicant: Amlogic (Shenzhen) Co., Ltd, Shenzhen 518057 (CN)
(72) Inventor: MENG, Lijun, Shenzhen (CN); DONG, Tao, Shenzhen (CN); LUO, Cheng, Shenzhen (CN)
(74) Representative: Murgitroyd & Company

(57) **Abstract**

The present disclosure discloses a network implemented method, apparatus and device for Android system-based dual network service coexistence. The method includes: determining, when a first network is being connected, whether there is a second network that has been connected; determining, in response to determining that there is the second network that has been connected, a network score of the first network based on a network score of the second network and a preset prioritized network, and determining whether backing up of direct connection routing information of the first network is needed; determining, in response to determining that there is no the second network that has been connected, whether backing up of the direct connection routing information of the first network is needed; and determining a current prioritized network based on the network score and updating the backed-up direct connection routing information. By intervening in the network score of the first network, the preset prioritized network set or preset by a user in a controller becomes the current prioritized network. Therefore, the user can choose a network according to the requirement, realizing that current prioritized network and the non-prioritized network can exchange by the network scoring mechanism.

## Description

### FIELD

The present application relates to the communication technical field, and more particularly, to a network implemented method, apparatus and device for Android system-based dual network service coexistence.

### BACKGROUND

At present, in Android products based on Google source code, a dual network architecture and a multi-network architecture are provided. However, multiple networks can not be used at the same time. Only a single network of a higher score can be used through the network scoring. Even if access to another network is performed forcibly, a data packet will be discarded by the routing policy of the existing network, causing that only one network in a wired network and a wireless network can work normally at the same time.

### SUMMARY

The present disclosure is intended to resolve at least one of technical problems in the prior art. Therefore, the aim of the present disclosure is to provide a network implemented method, apparatus and device for Android system-based dual network service coexistence.

The present disclosure provides a network implemented method for Android system-based dual network service coexistence, which includes: determining, when a first network is being connected, whether there is a second network that has been connected; determining, in response to determining that there is the second network that has been connected, a network score of the first network based on a network score of the second network and a preset prioritized network, and determining whether backing up of direct connection routing information of the first network is needed based on the second network and the preset prioritized network; determining, in response to determining that there is no the second network that has been connected, the network score of the first network based on the first network and the preset prioritized network, and determining whether backing up of the direct connection routing information of the first network is needed; and determining a current prioritized network based on the network score and updating the backed-up direct connection routing information.

Besides, the network implemented method for Android system-based dual network service coexistence according to embodiments of the present disclosure further includes the following additional technical features.

Furthermore, the determining the network score of the first network based on the network score of the second network and the preset prioritized network includes: determining, when the second network is the preset prioritized network, a difference between the network score of the second network and a first preset score as the network score of the first network; and determining, when the second network is not the preset prioritized network, a sum of the network score of the second network and a second preset score as the network score of the first network.

Furthermore, the determining whether backing up of the direct connection routing information of the first network is needed based on the second network and the preset prioritized network includes: performing, when the second network is the preset prioritized network, backing up of the direct connection routing information of the first network; and giving up, when the second network is not the preset prioritized network, backing up of the direct connection routing information of the first network.

Furthermore, before the determining the network score of the first network based on the network score of the second network and the preset prioritized network, the network implemented method further includes: increasing the network score of the second network to a full score when the second network is the preset prioritized network; determining a difference between the full score and a third preset score as the network score of the second network and performing backing up of the direct connection routing information of the second network when the second network is not the preset prioritized network. Here, the third preset score is not less than the second preset score.

Furthermore, the determining the network score of the first network based on the first network and the preset prioritized network, and determining whether backing up of the direct connection routing information of the first network is needed include: increasing the network score of the first network to a full score and giving up backing up of the direct connection routing information of the first network when the first network is the preset prioritized network; and determining a difference between the full score and a fourth preset score as the network score of the first network and performing backing up of the direct connection routing information of the first network when the first network is not the preset prioritized network.

Furthermore, the determining the current prioritized network based on the network score includes: determining a network corresponding to a highest network score as the current prioritized network.

Furthermore, the preset prioritized network is set by a user using an application program, or is preset in a controller.

In the network implemented method for Android system-based dual network service coexistence according to the embodiment of the present disclosure, when a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

With respect to the problems as described above, the present disclosure further provides a network implemented apparatus for Android system-based dual network service coexistence, including: a determining module configured to determine, when a first network is being connected, whether there is a second network that has been connected; a first determination module configured to determine, when it is determined that there is the second network that has been connected, a network score of the first network based on a network score of the second network and a preset prioritized network, and determine whether backing up of direct connection routing information of the first network is needed based on the second network and the preset prioritized network; a second determination module configured to determine, when it is determined that there is no the second network that has been connected, the network score of the first network based on the first network and the preset prioritized network, and determine whether backing up of the direct connection routing information of the first network is needed; and a third determination module configured to determine a current prioritized network based on the network score and update the backed-up direct connection routing information.

With the network implemented apparatus for Android system-based dual network service coexistence according to the embodiment of the present disclosure, when a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

With respect to the problems as described above, the present disclosure further provides an electronic device, including: the network implemented apparatus for the Android system-based dual network service coexistence according to any of the above embodiments.

Based on the electronic device of the embodiment of the present disclosure, when a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

With respect to the problems as described above, the present disclosure further provides a computer readable storage medium. The computer readable storage medium stores a network implemented program for Android system-based dual network service coexistence. The network implemented program for Android system-based dual network service coexistence, when executed by a processor, implements the network implemented method for the Android system-based dual network service coexistence according to any of the embodiments as described above.

Based on the computer readable storage medium of the embodiment of the present disclosure, the network implemented program for Android system-based dual network service coexistence which is stored on the computer readable storage medium, when executed by the processor, implements the following operations. When a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

Additional aspects and advantages of the disclosure will be given in part in the following descriptions, become apparent in part from the following descriptions, or be learned from the practice of the disclosure.

### BRIEF DESCRIPTION OF THE DRAWINGS

The above and/or additional aspects and advantages of the present disclosure will become apparent and readily comprehensible from the description of the embodiments in conjunction with the following drawings:
FIG.1 is a flow chart of a network implemented method for Android system-based dual network service coexistence according to an embodiment of the present disclosure.
FIG.2 is a schematic structure diagram of a network implemented apparatus for Android system-based dual network service coexistence according to an embodiment of the present disclosure.

### DETAILED DESCRIPTION

Embodiments of the present disclosure will be described below in details, and the embodiments described with reference to drawings are exemplary. Embodiments of the present disclosure will be described below in details.

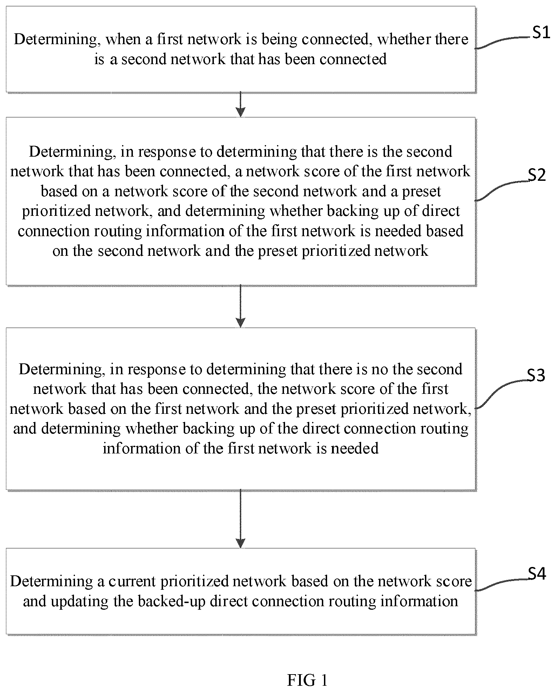

A network implemented method, an apparatus and a device for Android system-based dual network service coexistence according to an embodiment of the present disclosure are described below with reference to FIGS. 1 to 2

FIG.1 is a flow chart of a network implemented method for Android system-based dual network service coexistence according to an embodiment of the present disclosure. As shown in FIG 1, the network implemented method for Android system-based dual network service coexistence includes the following steps.

At step S 1, when a first network is being connected, it is determined whether there is a second network that has been connected.

Specifically, an Android system provides a dual network architecture and a multiple-network architecture to allow a device equipped with an Android system to connect to multiple networks at the same time. When a new network referred as e.g., a first network is being connected, it is needed to determine whether there is a network referred as e.g., a second network that has been connected, so as to determine a prioritized network. In a specific embodiment, a standard interface RegisterNetworkFactory based on an Android system can be used to sense whether there is a first network is being connected. After sensing that the first network is being connected, it determines whether there is a second network which has been connected so as to determine a prioritized network based on the first network and the second network. Specifically, devices equipped with an Android system include but are not limited to:smartphones, tablets and smart TVs.

At step S2, if it is determined that there is the second network that has been connected, a network score of the first network is determined based on a network score of the second network and a preset prioritized network, and it is determined, based on the second network and the preset prioritized network, whether backing up of direct connection routing information of the first network is needed. Specifically, the preset prioritized network is set by a user using an application program, or is preset in a controller.

Specifically, if it is determined that there is the second network that has been connected, a network score of the first network is determined based on the network score of the second network and based on whether the preset prioritized network is the second network. In this way, by intervening in the network score of the first network, the preset prioritized network set or preset by the user in the controller becomes a current prioritized network. Therefore, the user can choose a network according to demand so as to achieve that a current prioritized network and a non-prioritized network can exchange with each other by the network scoring mechanism at any time. It is determined whether backing up of the direct connection routing information of the first network is needed based on the second network and based on whether the preset prioritized network is the second network to keep the routing path of data packets of a non-prioritized network so as to ensure the robustness of the non-prioritized network. Therefore, the first network and the second network can both work normally at the same time by using different network cards.

It should be noted that network scoring is a method to measure and evaluate quality and performance of a network. Initial scores of the first network and the second score in the embodiment of the present disclosure are preset constants. The Android system assign different score values to different networks and preset the score values in a controller. Specifically, the network score of the Ehernet is for example 70, the network score of Wireless Fidelity (WiFi, as a wireless network) is for example 50, and the network scores of the Ehernet and WiFi both are 0 when all these networks are disconnected.

At step S3, if it is determined that there is no the second network that has been connected, the network score of the first network is determined based on the first network and the preset prioritized network, and it is determined whether backing up of the direct connection routing information of the first network is needed.

Specifically, if it is determined that there is no the second network that has been connected, the network score of the first network is determined only based on the first network and on whether the preset prioritized network is the first network. In this way, by intervening in the network score of the first network, the preset prioritized network set or preset by the user in the controller becomes a current prioritized network. It is determined whether backing up of the direct connection routing information of the first network is needed based on the first network and the preset prioritized network. In this way, when the first network is not the current prioritized network, the routing path of network data packets of the first network can be kept so as to ensure the robustness of the first network and normal working of the first network.

At step S4, the current prioritized network is determined based on the network score, and the backed-up direct connection routing information is updated. Specifically, the network corresponding to a highest network score is determined as the current prioritized network.

Specifically, the network score of the first network is compared with the network score of the second network, and the network of the highest network score is determined as the current prioritized network, and the backed-up direct connection routing information of the non-prioritized network is updated. It can be understood that the direct connection routing information of the non-prioritized network being backed up equate to the direct connection routing information of the non-prioritized network being temporarily cached. After the backed-up direct connection routing information of the non-prioritized network is updated, the network of the highest network score is determined as the current prioritized network. In other words, at the same time of the preset prioritized network becoming the current prioritized network, the routing path of data packets of the non-prioritized network are kept to ensure the robustness of the non-prioritized network. Therefore, the first network and the second network can use different network cards at the same time and can both work normally.

In a specific embodiment, Route Info can be obtained by a standard interface that is based on the an Android system and can be temporarily cached for management. The backed-up direct connection routing information can be updated by scheduling the Netd standard interface addLegacyRouteForNetId.

In an embodiment of the present disclosure, the determining the network score of the first network based on the network score of the second network and the preset prioritized network includes: determining, when the second network is the preset prioritized network, a difference between the network score of the second network and a first preset score as the network score of the first network; and determining, when the second network is not the preset prioritized network, a sum of the network score of the second network and a second preset score as the network score of the first network.

Specifically, the first preset score and the second preset score are both the constants having moderate values. The first preset score and the second preset score are preset in the controller and are used to intervene in the network score of the first network to make the preset prioritized network become the current prioritized network. Specifically, when the second network is the preset prioritized network, a difference between the network score of the second network and the first preset score is determined as the network score of the first network, so as to ensure that the network score of the first network is less than the network score of the second network. When the second network is not the preset prioritized network, the first network can be considered as the prioritized network. To ensure that the network score of the first network is higher than the network score of the second network, a sum of the network score of the second network and the second preset score is determined as the network score of the first network. Therefore, by intervening in the network score of the first network, the preset prioritized network set or preset by the user in the controller can become the current prioritized network and the user can choose a network according to the requirement so as to realize that current prioritized network and the non-prioritized network can exchange with each other at any time by the network scoring mechanism.

In a specific embodiment, the first preset score is for example 10, the second preset score is for example 20, the first network is for example Ehernet and has a network score of 70 as an example, the second network is for example WiFi and has a network score of 50 as an example. When the second network WiFi is the preset prioritized network, a difference value of 40 between the network score of 50 of the second network WiFi and the first preset score of 10 is determined as the network score of the first network, so that the network score of the first network Ehernet is less than the network score of the second network WiFi. Therefore, the second network WiFi is the current prioritized network. When the second network WiFi is not the preset prioritized network, a sum of 70 between the network 50 of the second network WiFi and the second preset score of 20 is determined as the network score of the first network Ehernet, so as to make sure that the network score of the first network Ehernet is higher than that of the second network WiFi. Therefore, the first network Ehernet is the current prioritized network.

In an embodiment of the present disclosure, the determining whether backing up of the direct connection routing information of the first network is needed based on the second network and the preset prioritized network includes: performing, when the second network is the preset prioritized network, backing up of the direct connection routing information of the first network; and giving up, when the second network is not the preset prioritized network, backing up of the direct connection routing information of the first network.

Specifically, when the second network is the preset prioritized network, the first network is a non-prioritized network. Therefore, it is not needed to perform backing up of the direct connection routing information of the second network, and it is only needed to perform backing up of the direct connection routing information of the first network. In this way, after the backed-up direct connection routing information of the first network is updated, the routing path of data packets of the first network can be kept so as to ensure the robustness of the first network. When the second network is not the preset prioritized network, at this time the first network is the prioritized network. Therefore, the direct connection routing information of the first network is not backed up. Therefore, the first network and the second network can use different network cards at the same time and both can work normally.

In an embodiment of the present disclosure, before the determining the network score of the first network based on the network score of the second network and the preset prioritized network, the method further includes: increasing the network score of the second network to a full score when the second network is the preset prioritized network; determining a difference between the full score and a third preset score as the network score of the second network and performing backing up of the direct connection routing information of the second network when the second network is not the preset prioritized network. Here, the third preset score is not less than the second preset score.

Specifically, the third preset score is a constant having a moderate value and is preset in a controller. The third preset score is used to intervene in the network score of the first network to make the preset prioritized network become a current prioritized network. Specifically, when the second network is the preset prioritized network, the network score of the second network is increased to a full score so as to ensure that the network score of the second network is higher than the network score of the first network. When the second network is not the preset prioritized network, a difference between the full score and the third preset score is determined as the network score of the second network to ensure that the network score of the second network is less than the full score, so as to cause that the network score of the first network is higher than that of the second network under intervention. In addition, backing up of the direct connection routing information of the second network is performed. In this way, the preset prioritized network set or preset by the user in the controller becomes the current prioritized network, and thus the user can choose a network according to the requirement, realizing that current prioritized network and the non-prioritized network can exchange with each other at any time by the network scoring mechanism.

It should be understood that if it is determined that there is the second network that has been connected, and the second network is not the preset prioritized network, when determining the network score of the first network, the sum of the network score of the second network and the second preset score, as the network score of the first network, should not exceed the full score of the network scoring. Therefore, before determining the network score of the first network based on the network score of the second network and the preset prioritized network, a difference between full scores and the third preset score is determined as the network score of the second network, and the third preset score is not less than the second preset score.

In an embodiment of the present disclosure, the determining the network score of the first network based on the first network and the preset prioritized network, and determining whether backing up of the direct connection routing information of the first network is needed include: increasing the network score of the first network to a full score and giving up backing up of the direct connection routing information of the first network when the first network is the preset prioritized network; and determining a difference between the full score and a fourth preset score as the network score of the first network and performing backing up of the direct connection routing information of the first network when the first network is not the preset prioritized network.

Specifically, the fourth preset score is a constant having a moderate value and is preset in a controller. The fourth preset score is used to intervene in the network score of the first network to make the preset prioritized network become a current prioritized network. Specifically, when the first network is the prioritized network, the network score of the first network is increased to a full score to ensure that the network score of the first network is higher than that of the second network when the second network is connected, so as to achieve that the priority of the first network is kept and the direct connection routing information of the first network is not backed up. When the first network is not the preset prioritized network, a difference between the full score and the fourth preset score is determined as the network score of the first network. When the second network is connected, a certain score is added to the network score of the first network, so that the network score of the second network is higher than that of the first network and the second network becomes a current prioritized network. Meanwhile, back up to the direct connection routing information of the first network is performed. In this way, after updating the backed-up direct connection routing information of the first network, the routing path of data packets of the first network can be kept so as to ensure the robustness of the first network.

In the network implemented method for Android system-based dual network service coexistence according to the embodiment of the present disclosure, when a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

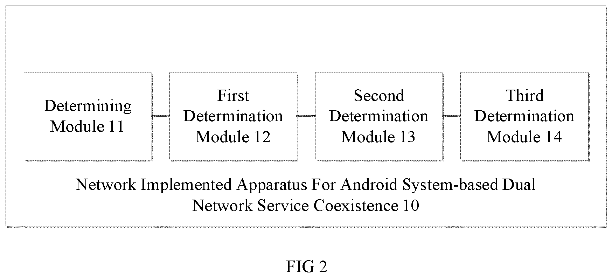

Another embodiment of the present disclosure discloses a network implemented apparatus for Android system-based dual network service coexistence. FIG.2 is a schematic structure diagram of a network implemented apparatus for Android system-based dual network service coexistence according to an embodiment of the present disclosure. As shown in FIG 2, the apparatus 10 includes a determining module 11, a first determination module 12, a second determination module 13 and a third determination module 14. The determining module 11 is configured to determine, when a first network is being connected, whether there is a second network that has been connected. The first determination module 12 is configured to determine, when it is determined that there is the second network that has been connected, a network score of the first network based on a network score of the second network and a preset prioritized network, and determine whether backing up of direct connection routing information of the first network is needed based on the second network and the preset prioritized network. The second determination module 13 is configured to determine, when it is determined that there is no the second network that has been connected, the network score of the first network based on the first network and the preset prioritized network, and determine whether backing up of the direct connection routing information of the first network is needed. The third determination module 14 is configured to determine the current prioritized network based on the network score and update the backed-up direct connection routing information.

In an embodiment of the present disclosure, the first determination module 12 determines the network score of the first network based on the network score of the second network and the preset prioritized network through operations including: determining, when the second network is the preset prioritized network, a difference between the network score of the second network and a first preset score as the network score of the first network; and determining, when the second network is not the preset prioritized network, a sum of the network score of the second network and a second preset score as the network score of the first network.

In an embodiment of the present disclosure, the first determination module 12 determines whether backing up of the direct connection routing information of the first network is needed based on the second network and the preset prioritized network through operations including: performing, when the second network is the preset prioritized network, backing up of the direct connection routing information of the first network; and giving up, when the second network is not the preset prioritized network, backing up of the direct connection routing information of the first network.

In an embodiment of the present disclosure, before determining the network score of the first network based on the network score of the second network and the preset prioritized network, the first determination module 12 is further configured to: increase the network score of the second network to a full score when the second network is the preset prioritized network; and determine a difference between the full score and a third preset score as the network score of the second network and perform backing up of the direct connection routing information of the second network when the second network is not the preset prioritized network. Here, the third preset score is not less than the second preset score.

In an embodiment of the present disclosure, the second determination module 13 determines the network score of the first network based on the first network and the preset prioritized network, and determines whether backing up of the direct connection routing information of the first network is needed, through operations including: increasing the network score of the first network to a full score and giving up backing up of the direct connection routing information of the first network when the first network is the preset prioritized network; and determining a difference between the full score and a fourth preset score as the network score of the first network and performing backing up of the direct connection routing information of the first network when the first network is not the preset prioritized network.

In an embodiment of the present disclosure, the third determination module 14 determines the current prioritized network based on the network score through operations including: determining a network corresponding to a highest network score as the current prioritized network.

In an embodiment of the present disclosure, the preset prioritized network is set by a user using an application program, or is preset in a controller.

It needs to be noted that when the network implemented apparatus 10 for Android system-based dual network service coexistence according to embodiments of the present disclosure configures the dual network service of an Android system, the specific implementation manner is similar to that of the network implemented method for Android system-based dual network service coexistence of the embodiments of the present disclosure. For the details, please refer to the description of the method. In order to reduce redundancy, details thereof are omitted here.

With the network implemented apparatus 10 for Android system-based dual network service coexistence according to the embodiment of the present disclosure, when a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

Another embodiment of the present disclosure discloses an electric device including the network implemented apparatus for Android system-based dual network service coexistence as described in any of the above embodiments.

It needs to be noted that when the electronic device according to embodiments of the present disclosure configures the dual network service of an Android system, the specific implementation manner is similar to that of the network implemented method for Android system-based dual network service coexistence of the embodiments of the present disclosure. For the details, please refer to the description of the method. In order to reduce redundancy, details thereof are omitted here.

Based on the electric device of the embodiment of the present disclosure, when a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

Another embodiment of the present disclosure discloses a computer readable storage medium. The computer readable storage medium stores network implemented program for Android system-based dual network service. The network implemented program for Android system-based dual network service coexistence when executed by a processor, implements the network implemented method for Android system-based dual network service coexistence as described in any of the above embodiments.

Based on the computer readable storage medium of the embodiment of the present disclosure, the network implemented program for Android system-based dual network service coexistence which is stored on the computer readable storage medium, when executed by the processor, implements the following operations. When a first network is being connected, it is determined whether there is a second network that has been connected. If it is determined that there is the second network that has been connected, a network score of the first network is determined based on a network score of the second network and a preset prioritized network, and it is determined whether backing up of the direct connection routing information of the first network is needed based on the second network and the preset prioritized network. If it is determined there is no a second network that has been connected, the network score of the first network is determined based on the first network and the preset prioritized network, and it is determined whether backing up of the direct connection routing information of the first network is needed. A current prioritized network is determined based on the network score, and the backed-up direct connection routing information is updated. In this way, by intervening in the network score of the first network, the preset prioritized network set or preset by the user in the controller becomes the current prioritized network. Therefore, the user can choose a network according to the requirement so as to realize that the current prioritized network and the non-prioritized network can exchange with each other at any time by the network scoring mechanism. Meanwhile, the routing path of data packets of the non-prioritized network can be kept so as to ensure the robustness of the non-prioritized network. Therefore, the first network and the second network can use different network cards at the same time, and can both work normally.

In the description of this specification, description with reference to terms "one embodiment", "some embodiments", "illustrative embodiments", "examples", "specific examples", or "some examples" means that the specific features, structures, materials, or characteristics described in conjunction with the embodiments or examples are included in at least one embodiment or example of the present disclosure. In this specification, the illustrative expressions of the above terms may not necessarily refer to the same embodiments or examples.

Although embodiments of the present disclosure have been shown and described, those skilled in the art can understand that various changes, modifications, substitutions, and variations can be made to these embodiments without departing from the principles and purposes of the present disclosure, and the scope of the present disclosure is limited by the claims and their equivalents.

## Claims

1. A network implemented method for Android system-based dual network service coexistence, comprising:
determining, when a first network is being connected, whether there is a second network that has been connected;
determining, in response to determining that there is the second network that has been connected, a network score of the first network based on a network score of the second network and a preset prioritized network, and determining whether backing up of direct connection routing information of the first network is needed based on the second network and the preset prioritized network;
determining, in response to determining that there is no the second network that has been connected, the network score of the first network based on the first network and the preset prioritized network, and determining whether backing up of the direct connection routing information of the first network is needed; and
determining a current prioritized network based on the network score and updating the backed-up direct connection routing information.

2. The network implemented method for the Android system-based dual network service coexistence according to claim 1, wherein said determining the network score of the first network based on the network score of the second network and the preset prioritized network comprises:
determining, when the second network is the preset prioritized network, a difference between the network score of the second network and a first preset score as the network score of the first network; and
determining, when the second network is not the preset prioritized network, a sum of the network score of the second network and a second preset score as the network score of the first network.

3. The network implemented method for the Android system-based dual network service coexistence according to claim 2, wherein said determining whether backing up of the direct connection routing information of the first network is needed based on the second network and the preset prioritized network comprises:
performing, when the second network is the preset prioritized network, backing up of the direct connection routing information of the first network; and
giving up, when the second network is not the preset prioritized network, backing up of the direct connection routing information of the first network.

4. The network implemented method for the Android system-based dual network service coexistence according to claim 2 or 3, further comprising: before said determining the network score of the first network based on the network score of the second network and the preset prioritized network,
increasing the network score of the second network to a full score when the second network is the preset prioritized network;
determining a difference between the full score and a third preset score as the network score of the second network and performing backing up of the direct connection routing information of the second network when the second network is not the preset prioritized network, wherein the third preset score is not less than the second preset score.

5. The network implemented method for the Android system-based dual network service coexistence according to any of claims 1 to 4, wherein said determining the network score of the first network based on the first network and the preset prioritized network, and determining whether backing up of the direct connection routing information of the first network is needed comprise:
increasing the network score of the first network to a full score and giving up backing up of the direct connection routing information of the first network when the first network is the preset prioritized network; and
determining a difference between the full score and a fourth preset score as the network score of the first network and performing backing up of the direct connection routing information of the first network when the first network is not the preset prioritized network.

6. The network implemented method for the Android system-based dual network service coexistence according to any of claims 1 to 5, wherein said determining the current prioritized network based on the network score comprises:
determining a network corresponding to a highest network score as the current prioritized network.

7. The network implemented method for Android system-based dual network service coexistence according to any of claims 1 to 6, wherein the preset prioritized network is set by a user using an application program, or is preset in a controller.

8. A network implemented apparatus for the Android system-based dual network service coexistence, comprising:
a determining module configured to determine, when a first network is being connected, whether there is a second network that has been connected;
a first determination module configured to determine, when it is determined that there is the second network that has been connected, a network score of the first network based on a network score of the second network and a preset prioritized network, and determine whether backing up of direct connection routing information of the first network is needed based on the second network and the preset prioritized network;
a second determination module configured to determine, when it is determined that there is no the second network that has been connected, the network score of the first network based on the first network and the preset prioritized network, and determine whether backing up of the direct connection routing information of the first network is needed; and
a third determination module configured to determine a current prioritized network based on the network score and update the backed-up direct connection routing information.

9. The network implemented apparatus for the Android system-based dual network service coexistence according to claim 8, wherein the first determination module is configure to:
determine, when the second network is the preset prioritized network, a difference between the network score of the second network and a first preset score as the network score of the first network; and
determine, when the second network is not the preset prioritized network, a sum of the network score of the second network and a second preset score as the network score of the first network.

10. The network implemented apparatus for the Android system-based dual network service coexistence according to claim 9, wherein the first determination module is configure to:
perform, when the second network is the preset prioritized network, backing up of the direct connection routing information of the first network; and
give up, when the second network is not the preset prioritized network, backing up of the direct connection routing information of the first network.

11. The network implemented apparatus for the Android system-based dual network service coexistence according to claim 9 or 10, wherein the first determination module is configure to: before determining the network score of the first network based on the network score of the second network and the preset prioritized network,
increase the network score of the second network to a full score when the second network is the preset prioritized network; and
determine a difference between the full score and a third preset score as the network score of the second network and perform backing up of the direct connection routing information of the second network when the second network is not the preset prioritized network. Here, the third preset score is not less than the second preset score.

12. The network implemented apparatus for the Android system-based dual network service coexistence according to any of claims 9 to 11, wherein the second determination module is configured to:
increase the network score of the first network to a full score and give up backing up of the direct connection routing information of the first network when the first network is the preset prioritized network; and
determine a difference between the full score and a fourth preset score as the network score of the first network and perform backing up of the direct connection routing information of the first network when the first network is not the preset prioritized network.

13. The network implemented apparatus for the Android system-based dual network service coexistence according to any of claims 9 to 12, wherein the third determination module is configured to determine a network corresponding to a highest network score as the current prioritized network.

14. An electronic device, comprising:
the network implemented apparatus for the Android system-based dual network service coexistence according to any of claims 8 to 13.

15. A computer readable storage medium on which a network implemented program for Android system-based dual network service coexistence is stored, the network implemented program for the Android system-based dual network service coexistence when executed by a processor, implements the network implemented method for the Android system-based dual network service coexistence according to any of claims 1 to 7.
